# DEMANDE DE BREVET EUROPEEN

(11) **EP 2 237 286 A1**
(43) Date de publication de la demande: **06.10.2010**
(21) Numéro de dépôt: 10305229.6
(22) Date de dépôt: 05.03.2010
(51) Int. Cl.: H01B 3/44, C08K 5/58

(54) **Câble d'énergie et/ou de télécommunication avec couche polymérique obtenue d'une composition comprenant un catalyseur de réticulation à base d'un composé d'étain**

(30) Priorité: 30.03.2009 FR 0951989
(71) Demandeur: Nexans, 75008 Paris (FR)
(72) Inventeur: Alric, Jérôme, 38080 L'ISLE D'ABEAU (FR); Abeguile, Mikael, 69630 CHAPONOST (FR); Pinto, Olivier, 69003 LYON (FR); Marty, Jean-Michel, 69110 SAINTE FOY LES LYON (FR)
(74) Mandataire: Peguet, Wilfried

(57) **Abrégé**

La présente invention concerne un câble d'énergie et/ou de télécommunication comprenant au moins un élément conducteur entouré par une couche polymérique extrudée et réticulée, ladite couche polymérique étant obtenue à partir d'une composition réticulable comprenant un polymère comportant sur sa chaîne principale des groupements silanes hydrolysables, une charge minérale et un catalyseur de réticulation, **caractérisé en ce que** le catalyseur de réticulation a la formule suivante :

(C₈H₁₇)ₓsn(SR'COOR")_{y}

dans laquelle :
- x et y sont respectivement deux entiers tels que x + y = 4, 1 ≤ x ≤ 3, et 1 ≤ y ≤ 3 ;
- R' est un groupe alkyle CₙH₂ₙ avec n étant un entier tel que 1 ≤ n ≤ 4 ; et
- R" est un groupe alkyle CₘH₂ₘ₊₁ avec m étant un entier tel que 1 ≤ m ≤ 12.

## Description

La présente invention se rapporte à un câble d'énergie et/ou de télécommunication comprenant une couche polymérique extrudée et réticulée, ainsi qu'à un procédé de fabrication dudit câble.

Les catalyseurs de réticulation, notamment les catalyseurs à base de dibutyl étain, pour la réticulation de polyoléfines greffées silanes sont bien connus de l'homme du métier dans le domaine de la câblerie.

A titre d'exemple, le document US 2003 0137969 décrit une composition réticulable pour câble électrique. Cette composition comprend un polymère thermoplastique du type polymère d'éthylène, une charge minérale, un organosilane insaturé, un générateur de radicaux libres et un agent de réticulation choisi de préférence parmi le dilaurate de dibutyl étain (DBTDL), le dilaurate de dioctyl étain (DOTDL) et l'octoate d'étain.

Toutefois, la Directive européenne 67/548/EEC sur la régulation des substances dangereuses tend à proscrire l'utilisation des catalyseurs à base de dibutyl étain du fait de leur caractère reprotoxique. En effet, ces catalyseurs contiennent inévitablement un sel de tributyl étain (C₄H₉)₃Sn en teneur variable, formé lors de l'alkylation de l'étain, le tributyl étain étant considéré comme toxique pour la reproduction de l'espèce humaine par cette directive.

En outre, même si le DOTDL et l'octoate d'étain sont beaucoup moins toxiques que le DBTDL, le dilaurate de dibutyl étain, le dilaurate de dioctyl étain et l'octoate d'étain sont des catalyseurs très réactifs dans les procédés de mise en oeuvre des compositions réticulables en câblerie. Ainsi, lors de l'extrusion de la composition réticulable, et préalablement à l'étape de réticulation, on observe généralement la formation prématurée de gel au sein de l'extrudeuse, ce gel étant le signe d'une réaction de réticulation non maîtrisée qui débute de façon prématurée dans l'outillage de l'extrudeuse. Cette formation prématurée de gel crée des défauts d'extrusion sur la couche polymérique extrudée et réticulée obtenue à partir de la composition réticulable, ce qui induit de ce fait des défauts diélectriques et/ou dimensionnels sur ladite couche polymérique.

Le but de la présente invention est de pallier les inconvénients des techniques de l'art antérieur en proposant notamment un catalyseur de réticulation pour couche polymérique extrudée et réticulée de câble d'énergie et/ou de télécommunication limitant de façon significative la formation prématurée de gel tout en étant non toxique pour la reproduction de l'espèce humaine.

La présente invention a pour objet un câble d'énergie et/ou de télécommunication comprenant au moins un élément conducteur entouré par une couche polymérique extrudée et réticulée, ladite couche polymérique étant obtenue à partir d'une composition réticulable comprenant un polymère comportant sur sa chaîne principale des groupements silane hydrolysables, une charge minérale et un catalyseur de réticulation, **caractérisé en ce que** le catalyseur de réticulation a la formule suivante :

(C₈H₁₇)ₓSn(SR'COOR")_{y}

dans laquelle :
- x et y sont respectivement deux entiers tels que x + y = 4, 1 ≤ x ≤ 3 et 1 ≤ y ≤ 3, et de préférence x = y = 2 ;
- R' est un groupe alkyle CₙH₂ₙ avec n étant un entier tel que 1 ≤ n ≤ 4, de préférence avec n = 1 ; et
- R" est un groupe alkyle CₘH₂ₘ₊₁ avec m étant un entier tel que 1 ≤ m ≤ 12, de préférence avec 4 ≤ m ≤ 10, et encore plus préférentiellement avec m = 8.

Grâce à l'invention, le catalyseur de réticulation n'est pas reprotoxique puisqu'il ne comprend pas de sel de tributyl étain (C₄H₉)₃Sn. Le catalyseur de réticulation peut en outre comprendre un sel de trioctyl étain (C₈H₁₇)₃Sn formé lors de l'alkylation de l'étain, mais ce dernier n'est pas considéré comme reprotoxique par la Directive européenne 67/548/EEC. En outre, le catalyseur de réticulation de l'invention permet avantageusement d'éviter la formation prématurée de gel lors de l'extrusion de la composition réticulable grâce à sa réactivité particulièrement bien adaptée dans les conditions d'extrusion en câblerie.

Dans un exemple préféré, la formule du catalyseur de réticulation peut être telle que n = 1 et m = 8, et de préférence la formule du catalyseur de réticulation correspond à (C₈H₁₇)ₓSn(SCH₂COOCH₂CH(C₂H₅)C₄H₉)_{y}.

Plus particulièrement, le catalyseur de réticulation peut avantageusement être le bis(2-éthyle hexyle mercaptoacétate) de dioctyl étain de formule (C₈H₁₇)₂Sn(SCH₂COOCH₂CH(C₂H₅)C₄H₉)₂.

On entend plus particulièrement par « catalyseur de réticulation » un catalyseur d'hydrolyse et de condensation de fonctions silanols.

Le polymère de l'invention comprend notamment une chaîne principale, comportant une séquence linéaire ou ramifiée d'unités constitutives, située entre deux groupements terminaux aux extrémités de ladite chaîne principale. De préférence, les extrémités de la chaîne principale ne comportent pas de groupements silane hydrolysables.

Le polymère comportant sur sa chaîne principale des groupements silane hydrolysables est appelé dans la suite de la description « polymère greffé silane ».

Le terme « polymère » en tant que tel signifie de façon générale homopolymère ou copolymère.

Le polymère de l'invention peut être avantageusement un polymère d'oléfine (polyoléfine) ou, en d'autres termes, un homo- ou co-polymère d'oléfine, et peut être notamment un polymère thermoplastique ou un élastomère.

De préférence, le polymère d'oléfine est un polymère d'éthylène ou de propylène.

A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR) tels que par exemple les terpolymères d'éthylène propylène diène (EPDM), et leurs mélanges.

La composition réticulable de l'invention peut bien entendu comprendre au moins un polymère comportant sur sa chaîne principale des groupements silane hydrolysables (i.e. polymère de l'invention), c'est-à-dire qu'elle peut comprendre un mélange de plusieurs polymères comportant sur leur chaîne principale des groupements silane hydrolysables.

En outre, elle peut comprendre ou non d'autres types de polymères, différents des polymères de l'invention.

Lorsque la composition réticulable comprend d'autres types de polymères, elle peut se composer d'au moins 50 parties en poids de polymères de l'invention pour 100 parties en poids de polymère dans ladite composition, et de préférence d'au moins 80 parties en poids de polymères de l'invention pour 100 parties en poids de polymère dans ladite composition.

Lorsque la composition réticulable ne comprend pas d'autres types de polymères différents des polymères de l'invention, elle se compose donc uniquement d'un ou de plusieurs polymères de l'invention (i.e. polymère(s) comportant sur sa/leur chaîne principale des groupements silane hydrolysables) en tant que polymère dans ladite composition.

Les groupements silanes hydrolysables du polymère de l'invention peuvent être des groupements alcoxysilanes et/ou des groupements carboxysilanes, de préférence des groupements alcoxysilanes.

A titre d'exemple, le polymère greffé silane peut être obtenu par greffage de vinyle alcoxysilane sur au moins un polymère d'oléfine tel que décrit ci-avant, classiquement en présence d'un générateur de radicaux libres.

Le polymère greffé silane peut également être obtenu par copolymérisation in situ d'au moins un monomère d'oléfine, de préférence au moins un monomère d'éthylène, avec un vinyle alcoxysilane. On peut citer plus particulièrement les copolymères d'éthylène et de vinyle silane (EVS) en tant que « polymères greffés silanes ».

La teneur en catalyseur de réticulation dans la composition réticulable peut aller de 100 ppm à 1000 ppm, « ppm » signifiant parties en poids pour 1 million de parties en poids de polymère greffé silane.

La charge minérale dans la composition réticulable de l'invention permet avantageusement de diminuer la chaleur de combustion de ladite composition. La composition peut comprendre au moins 75 parties en poids de charge minérale par rapport à 100 parties en poids de polymère dans la composition, de préférence au moins 90 parties en poids de charge minérale par rapport à 100 parties en poids de polymère dans la composition, et encore plus préférentiellement au moins 150 parties en poids de charge minérale par rapport à 100 parties en poids de polymère dans la composition.

La charge minérale de l'invention peut être choisie parmi une charge ignifugeante et une charge inerte (ou charge non combustible), ou un de leurs mélanges, de préférence la charge minérale étant basique.

A titre d'exemple, la charge ignifugeante, qui est une charge minérale apte à libérer de l'eau lors de sa décomposition par élévation de température, peut être le trihydroxyde d'aluminium (Al(OH)₃) ou le dihydroxyde de magnésium (Mg(OH)₂), qui sont toutes les deux des charges basiques. La charge inerte peut être de la craie CaCO₃, de la chaux CaO, du talc, de l'argile, ou du noir de carbone.

Afin de garantir un câble d'énergie et/ou de télécommunication dit « HFFR » pour l'anglicisme « Halogen Free Flame Retardant », la ou les différentes couches polymériques dudit câble électrique ne comprennent préférentiellement pas de composés halogénés. Ces composés halogénés peuvent être de toutes natures, tels que par exemple des polymères fluorés ou des polymères chlorés comme le polychlorure de vinyle (PVC), des plastifiants halogénés, des charges minérales halogénés, ...etc.

Selon un mode de réalisation particulier de l'invention, la couche polymérique est une couche électriquement isolante disposée autour dudit ou desdits éléments conducteurs (électriques et/ou optiques), de préférence la couche électriquement isolante est directement en contact avec le ou les éléments conducteurs.

Selon un autre mode de réalisation particulier de l'invention, le ou les éléments conducteurs sont isolés électriquement, et la couche polymérique est une gaine de protection disposée autour dudit ou desdits éléments conducteurs (électrique et/ou optique) isolés.

Un autre objet de l'invention est un procédé de fabrication d'un câble selon l'invention, ledit procédé comprenant les étapes consistant à :
i. préparer un mélange comprenant le polymère comportant sur sa chaîne principale des groupements silane hydrolysables, la charge minérale et le catalyseur de réticulation, le catalyseur de réticulation étant éventuellement sous forme de mélange maître, pour obtenir la composition réticulable,
ii. extruder la composition réticulable de l'étape i autour d'au moins un élément conducteur pour obtenir la couche polymérique extrudée, et
iii. réticuler la couche polymérique extrudée de l'étape ii.

Dans l'étape i de préparation du mélange, le catalyseur de réticulation est typiquement ajouté indépendamment des autres constituants du mélange tels que le polymère comportant sur sa chaîne principale des groupements silane hydrolysables (polymère greffé silane) et la charge minérale, ces deux derniers constituants pouvant être mélangés simultanément ou dans des étapes séparées. On connaît classiquement ce procédé sous la dénomination SIOPLAS.

Par exemple, dans une première variante, l'étape i peut comprendre les étapes consistant à :
i1. former le polymère greffé silane en présence de la charge minérale pour obtenir un polymère greffé silane chargé, et
i2. ajouter au polymère greffé silane chargé le catalyseur de réticulation pour obtenir la composition réticulable.

Dans une seconde variante, l'étape i peut comprendre les étapes consistant à :
i1a. former le polymère greffé silane,
i1b. ajouter la charge minérale au polymère greffé silane pour obtenir un polymère greffé silane chargé, et
i2. ajouter au polymère greffé silane chargé le catalyseur de réticulation pour obtenir la composition réticulable.

Les étapes i1 ou i1a et i1b peuvent s'effectuer classiquement dans un mélangeur continu de type bi-vis ou Buss, tandis que l'étape i2 s'effectue généralement au sein d'une extrudeuse monovis.

L'étape ii consiste à mettre la composition réticulable sous forme d'un profilé, ou en d'autres termes sous une forme déterminée, notamment sous la forme d'une couche polymérique autour d'au moins un élément conducteur. L'extrusion de la composition réticulable se fait typiquement à l'aide d'une extrudeuse monovis, et, en sortie d'extrudeuse, on obtient la composition réticulable extrudée.

L'étape iii de réticulation se fait de préférence en présence d'humidité, l'humidité pouvant être par exemple une atmosphère humide ou une immersion dans de l'eau.

D'autres caractéristiques et avantages de la présente invention apparaîtront à la lumière des exemples qui vont suivre, lesdits exemples étant donnés à titre illustratif et nullement limitatif.

### Exemples

### Préparation de mélanges-maîtres comprenant un catalyseur de réticulation

Les constituants des mélanges maîtres (MM) sont reportés dans le tableau 1 ci-après. Il est à noter que les quantités mentionnées dans le tableau 1 sont exprimées en pourcentage (%) en poids de constituants dans le mélange-maître.

**Tableau 1**

| Mélange-maître (% en poids) | MM1 | MM2 | MM3 |
|---|---|---|---|
| LDPE | 49,82 | | |
| EVA | 49,82 | | |
| CAT1 | 0,36 | - | - |
| CAT2 | - | 0,36 | - |
| CAT3 | - | - | 0,36 |

L'origine des constituants mentionnés dans le tableau 1 est la suivante:
- LDPE est un polyéthylène basse densité dont l'indice de fluidité (MFI) est de 1,0g/10min conformément à la norme ASTMD1238, ISO1133 ;
- EVA est un copolymère d'éthylène vinyle acétate comprenant 28 % en poids de groupements vinyle acétates, avec un MFI de 3,0 g/10min conformément à la norme ASTMD1238, ISO1133 ;
- CAT1 correspond au bis(mercaptoacetate de 2-éthyl-hexyle) de dioctyl étain, de formule [C₈H₁₇]₂-Sn-[SCH₂CO₂C₈H₁₇]₂, commercialisé par la société TIB Chemicals sous la référence TIB CAT 214 ;
- CAT2 correspond au bis(mercaptoacétate de 2-éthyl hexyle) de dibutyl étain, de formule [C₄H₉]₂-Sn-[SCH₂CO₂C₈H₁₇]₂, commercialisé par la société CROMPTON sous la référence MARK 17M ; et
- CAT3 correspond au dilaurate de dibutyl étain (DBTDL), de formule [C₄H₉]₂-Sn-[O₂CCₙH₂₃]₂, commercialisé par la société TIB Chemicals sous la référence TIB CAT 218.

Chaque mélange maître MM1 à MM3 a été préparé sur mélangeur continu type bi-vis en incorporant le catalyseur d'hydrolyse condensation via un système d'injection liquide alimenté par une pompe doseuse.

### Préparation de compositions réticulables

### Les constituants des compositions réticulables C1 à C7

Les constituants de chacune des compositions réticulables C1 à C7 sont rassemblés dans le tableau 2 ci-après. Il est à noter que les quantités mentionnées dans le tableau 2 sont exprimées en parties en poids pour cent parties en poids de polymère (pcr) dans la composition.

**Tableau 2**

| Composition réticulable (pcr) | C1 | C2 | C3 | C4 | C5 | C6 | C7 |
|---|---|---|---|---|---|---|---|
| EVA greffé silane | 100 | 100 | 100 | - | - | - | - |
| PEO/LLDPE greffé silane | - | - | - | 100 | 100 | - | - |
| PEO/PP greffé silane | - | - | - | - | - | 100 | 100 |
| Al(OH)₃ | 180 | 180 | 180 | 110 | 110 | 150 | 150 |
| MM1 | 2 | - | - | 2 | - | 2 | - |
| MM2 | - | 2 | - | - | 2 | - | 2 |
| MM3 | - | - | 2 | - | - | - | - |
| Additif 1 | 2 | 2 | 2 | 3 | 3 | 1 | 1 |
| Additif 2 | 3.5 | 3.5 | 3.5 | 3 | 3 | 4 | 4 |
| Additif 3 | 2.5 | 2.5 | 2.5 | - | - | - | - |
| Additif 4 | 0.5 | 0.5 | 0.5 | 0.5 | 0.5 | 0.5 | 0.5 |

Dans le tableau 2 :
- EVA greffé silane correspond à un copolymère d'éthylène vinyle acétate greffé silane,
- PEO/LLDPE greffé silane correspond à un mélange de copolymère éthylène octène et de polyéthylène basse densité linéaire greffés silane, et
- PEO/PP greffé silane correspond à un mélange de copolymère éthylène octène et de polypropylène greffés silane,

La charge minérale utilisée dans les exemples est le trihydroxyde d'aluminium Al(OH)₃, qui est une charge ignifugeante basique.

Différents additifs (Additifs 1, 2, 3 et 4) peuvent également être ajoutés aux compositions réticulables tels qu'un agent de mise en oeuvre (Additif 1), un antioxydant (Additif 2), un stabilisant des rayonnements ultraviolet (Additif 3) et/ou un pigment (Additif 4).

### La préparation du mélange des compositions réticulables C1 à C7

Au préalable, on prépare un prémélange de polymère greffé silane chargé en deux étapes dans un mélangeur de type bi-vis ou Buss.

Tout d'abord, on forme le polymère greffé silane par greffage de fonctions alcoxysilanes sur la ou les polyoléfines correspondantes selon le protocole décrit dans le brevet FR2030899.

Une fois le polymère greffé silane obtenu, on incorpore le trihydroxyde d'aluminium dans ledit polymère greffé silane à l'état fondu pour obtenir le prémélange de polymère greffé silane chargé.

Ensuite, ledit prémélange ainsi que le catalyseur de réticulation sous forme de mélange maître MM, et éventuellement les Additifs 1, 2, 3 et/ou 4, sont introduits dans une extrudeuse de type monovis (diamètre vis = 40 mm ; ratio L/D = 25) formant ainsi la composition réticulable de l'invention.

### Extrusion des compositions réticulables

Chacune des compositions réticulables C1 à C7 est extrudée sous forme d'un ruban à travers une filière ruban (20 mm de largeur et 1 mm d'épaisseur) de l'extrudeuse monovis.

### Réticulation des compositions extrudées

Les conditions de réticulation sont indiquées dans le tableau 3 ci-après. Elles sont de deux types :
- réticulation dite « forcée » ou « en piscine » : elle consiste à placer la composition extrudée dans l'eau à 65°C pendant 24 heures ; et
- réticulation dite « non forcée » ou « auto-réticulation » : elle consiste à placer la composition extrudée dans une humidité relative de 50 % à 25°C pendant une durée comprise entre 10 et 15 jours.

### Caractérisation du degré de réticulation

Une fois que les compositions extrudées ont subi les conditions de réticulation « forcée » ou « non forcée », le degré de réticulation est caractérisé par la méthode consistant à évaluer la mesure du fluage à chaud sous charge selon la norme NF EN60811-2-1. Le test correspondant est communément désigné par l'anglicisme Hot Set Test.

Il consiste concrètement à lester une extrémité d'une éprouvette de matériau avec une masse correspondant à l'application d'une contrainte équivalente à 0,2MPa, et à placer l'ensemble dans une étuve chauffée à 200+/-1°C pendant une durée de 15 minutes. Au terme de ce délai, on relève l'allongement à chaud sous charge de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai, sous l'action conjuguée de la contrainte mécanique et de la température, le résultat au test serait alors logiquement considéré comme un échec.

### Résultats

Le tableau 3 ci-après reprend les résultats de fluages à chaud mais également une appréciation qualitative de la surface des compositions une fois extrudées et réticulées.

Une inspection visuelle du ruban extrudé permet de vérifier si des aspérités de surface sont présentes. De ce fait, la mention « Présence de gel » dans le tableau 3 correspond à une réticulation prématurée de la composition réticulable au cours de l'extrusion.

**Tableau 3**

| Composition extrudée et réticulée | | CER1 | CER2 | CER3 | CER4 | CERS | CER6 | CER7 |
|---|---|---|---|---|---|---|---|---|
| Qualité de la surface après extrusion et réticulation | | Pas de gel | Pas de gel | Présence de gel | Pas de gel | Pas de gel | Pas de gel | Pas de gel |
| Conditions de réticulation | | Réticulation non forcée | | | Réticulation forcée | | | |
| Fluage à chaud | Allongement sous charge (%) | 30% | 30% | 35% | 45% | 35% | 25% | 25% |
| | Rémanence (%) | 0% | 0% | 0% | 0% | 0% | 0% | 0% |

En comparant les compositions CER 1 et CER 2 avec la composition CER 3, on remarque que l'utilisation du DBTDL conduit à la formation prématurée de gel lors de l'étape d'extrusion, signe d'une réaction de réticulation non maîtrisée qui débute de façon prématurée dans l'outillage de l'extrudeuse. Ce phénomène n'apparaît pas lorsque l'on utilise un sel d'étain de type bis(alkylmercaptoacetate) de dialkyl étain.

Les tenues au fluage à chaud des compositions CER1 et CER2 sont très proches. De la même façon, ces mêmes propriétés restent quasiment inchangées pour les compositions CER4-5 et CER6-7, après un traitement en piscine identique de 24h à 65°C. Ces résultats démontrent que quelque soit la base de polymère greffé silane, le remplacement du bis(alkylmercaptoacetate) de dibutyl étain par le bis(alkylmercaptoacetate) de dioctyl étain est avantageux d'un point de vue toxicologique et environnemental. Enfin, le remplacement du catalyseur de type « dibutyl étain » par son homologue de type « dioctyl étain » n'altère pas le processus de réticulation et n'est pas accompagné d'un ralentissement significatif de la vitesse de réticulation.

## Revendications

1. Câble d'énergie et/ou de télécommunication comprenant au moins un élément conducteur entouré par une couche polymérique extrudée et réticulée, ladite couche polymérique étant obtenue à partir d'une composition réticulable comprenant un polymère comportant sur sa chaîne principale des groupements silanes hydrolysables, une charge minérale et un catalyseur de réticulation, **caractérisé en ce que** le catalyseur de réticulation a la formule suivante :
(C₈H₁₇)ₓSn(SR'COOR")_{y}
dans laquelle :
- x et y sont respectivement deux entiers tels que x + y = 4, 1 ≤ x ≤ 3, et 1 ≤ y ≤ 3;
- R' est un groupe alkyle CₙH₂ₙ avec n étant un entier tel que 1 ≤ n ≤ 4 ; et
- R" est un groupe alkyle CₘH₂ₘ₊₁ avec m étant un entier tel que 1 ≤ m ≤ 12.

2. Câble selon la revendication 1, **caractérisé en ce que** la formule du catalyseur de réticulation est telle que x = y = 2, n = 1 et m = 8.

3. Câble selon la revendication 1 ou 2, **caractérisé en ce que** le catalyseur de réticulation est le bis(2-éthyle hexyle mercaptoacétate) de dioctyl étain.

4. Câble selon l'une quelconque des revendications 1 à 3, **caractérisé en ce que** les groupements silane hydrolysables sont des groupements alcoxysilanes et/ou des groupements carboxysilanes.

5. Câble selon l'une quelconque des revendications 1 à 4, **caractérisé en ce que** la teneur en catalyseur de réticulation dans la composition va de 100 à 1000 ppm.

6. Câble selon l'une quelconque des revendications 1 à 5, **caractérisé en ce que** la couche polymérique est une couche électriquement isolante disposée autour dudit ou desdits éléments conducteurs.

7. Câble selon l'une quelconque des revendications 1 à 5, **caractérisé en ce que** le ou les éléments conducteurs sont isolés électriquement, et la couche polymérique est une gaine de protection disposée autour dudit ou desdits éléments conducteurs isolés.

8. Procédé de fabrication d'un câble selon l'une quelconques des revendications 1 à 7, ledit procédé comprenant les étapes consistant à :
i. préparer un mélange comprenant le polymère comportant sur sa chaîne principale des groupements silane hydrolysables, la charge minérale et le catalyseur de réticulation, le catalyseur de réticulation étant éventuellement sous forme de mélange maître, pour obtenir la composition réticulable,
ii. extruder la composition réticulable de l'étape i autour d'au moins un élément conducteur pour obtenir la couche polymérique extrudée, et
iii. réticuler la couche polymérique extrudée de l'étape ii.
